# EUROPEAN PATENT SPECIFICATION

(11) **EP 4 449 009 B1**
(45) Date of publication and mention of the grant of the patent: **10.09.2025**
(21) Application number: 22813753.5
(22) Date of filing: 23.11.2022
(51) Int. Cl.: F16P 3/12, B65G 43/00, F16P 3/14

(54) **A PRODUCT- OR CONTAINER-INLET STATION FOR AN OPERATING MACHINE**
PRODUKT- ODER BEHÄLTEREINLASSSTATION FÜR EINE ARBEITSMASCHINE
STATION D'ENTRÉE DE PRODUIT OU DE RÉCIPIENT POUR UNE MACHINE D'EXPLOITATION

(30) Priority: 13.12.2021 IT 202100031100
(43) Date of publication of application: 23.10.2024
(73) Proprietor: G.D S.p.A., 40133 Bologna (BO) (IT)
(72) Inventor: GIANESE, Giampaolo, 40133 Bologna (IT); VIGNUDINI, Roberto, 40133 Bologna (IT); LANZARINI, Luca, 40133 Bologna (IT); MEDINA, Enrico, 40133 Bologna (IT); BONAFEDE, Gaspare, 40133 Bologna (IT)
(74) Representative: Buzzi, Notaro & Antonielli d'Oulx S.p.A.
(86) International application number: PCT/IB2022/061338
(87) International publication number: WO 2023/111731

(56) References cited:
- EP-A2- 1 063 193
- EP-A2- 1 876 383
- FR-A1- 2 618 523
- US-A1- 2002 190 191

## Description

The present invention relates to an inlet station for products or containers for an operating machine.

Operating machine means any automatic machine, for example, intended for the packaging of products or containers. Inlet station means the station wherein the products or containers are loaded and advanced along one or more operating and/or transfer units.

It is known that access to an inlet station by an operator is only allowed in cases in which the machine is stopped, to ensure its safety. This happens due to the presence of moving parts, which could preclude the operator's safety. However, this negatively impacts the efficiency of the machine, as unwanted downtime is generated whenever the operator needs to access the inlet station. EP1063193A2 shows the preamble of claim 1.

The object of the present invention is to overcome the aforesaid drawbacks.

This object is achieved by means of an inlet station according to claim 1 and by means of a method according to claim 15.

The claims form an integral part of the technical disclosure provided here. Further characteristics and advantages of the present invention will become evident from the description that follows with reference to the attached drawings, provided purely by way of non-limiting example, wherein:
- Figure 1 represents an example of the inlet station described here according to an axonometric view;
- Figure 2 represents the inlet station of Figure 1 according to a view from an inner side of the operating machine;
- Figures 3a and 3b show two orthogonal views of a component of the inlet station of Figure 1;
- Figure 4 schematically represents an operating mode of the component of Figures 3A and 3B.

In the following description various specific details are illustrated aimed at a thorough understanding of the embodiments. The embodiments may be implemented without one or more of the specific details, or with other methods, components, materials, etc. In other cases, known structures, materials or operations are not shown or described in detail to avoid obscuring various aspects of the embodiments.

The references used here are only for convenience and do not therefore define the field of protection or the scope of the embodiments.

As anticipated above, the solution described here relates to an inlet station for products or containers for an operating machine. Operating machine means any automatic machine, for example, intended for packaging products or containers, preferably, but not limited to, a machine in the pharmaceutical sector (e.g. labeling machine as in the case illustrated) or in the tobacco sector.

Inlet station means the station or area wherein the products or containers are loaded and advanced along one or more operating and/or transfer units.

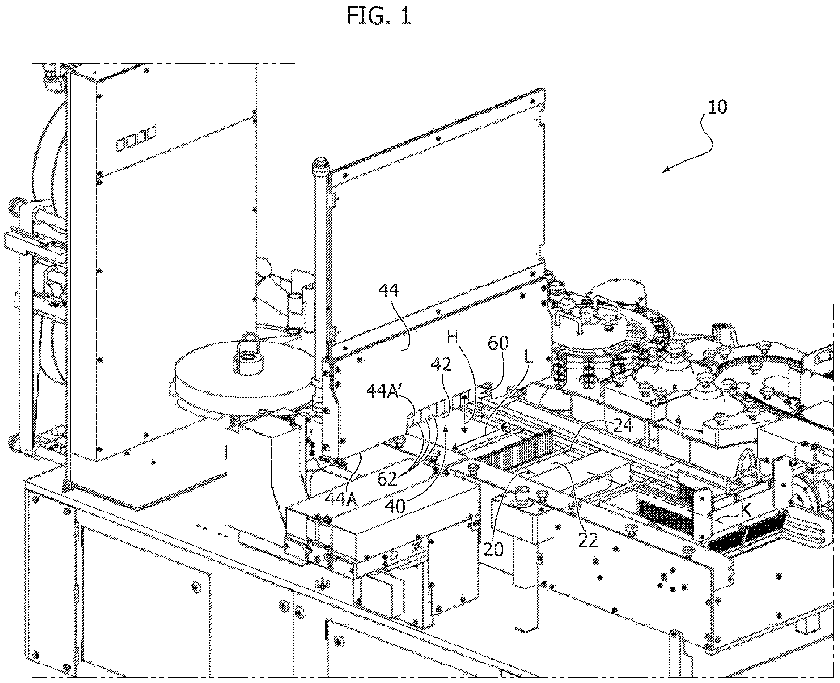

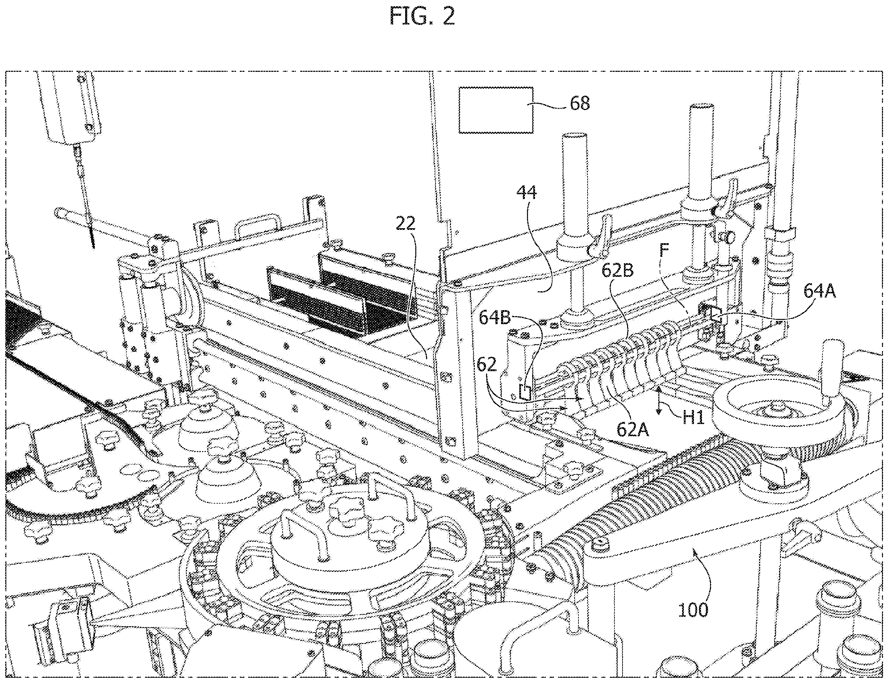

With reference to Figures 1 and 2, the inlet station described here - indicated as a whole with the reference number 10 - comprises:
- a conveyor 20 for advancing products or containers along a feed direction K;
- an inlet 40 intended to be traversed by the products or containers advancing on the conveyor 20 along the feed direction K; and
- a device 60 for controlling the inlet 40.

In one or more preferred embodiments, such as the one illustrated, the conveyor 20 comprises a conveyor plane 22 extending along the feed direction K. The conveyor 20 may, for example, be a conveyor belt, a roller track, a mobile carriage, etc.

In one or more preferred embodiments, such as the one illustrated, the conveyor 20 comprises a pair of side containment guides 24 to contain the flow of products or containers within a predetermined width L along a direction transverse to the feed direction K.

The inlet 40 comprises a passage 42 through which the products or containers advancing on the conveyor 20 enter the operating machine 100.

In one or more preferred embodiments, such as the one illustrated, the inlet 40 comprises a panel 44 arranged orthogonally to the feed direction K and positioned above the conveyor 20 so as to delimit the passage 42.

In one or more preferred embodiments, such as the one illustrated, the panel 44 has a shaped lower edge 44A, which is provided with a recessed and broken profile 44A', such as to define a height H of the passage 42 and a width equal to the said predetermined width L.

Therefore, the passage 42 has a width equal to the width L and a height equal to the height H.

In one or more preferred embodiments, such as the one illustrated, the control device 60 comprises a series of barrier members 62, which are positioned at the passage 42 and are arranged side-by-side along a direction transverse to the feed direction K so as to substantially cover the entire width L of the passage 42.

The barrier members 62 are positioned at the same height H1 with respect to the transport plane 22 of the conveyor 20 and are movably mounted independently of each other so that they can be lifted individually following the passage of the products or containers through the inlet 40.

In particular, the height H1 is such as to be lower than that of the products or containers in transit in the inlet station 10, so that they will impact against the barrier members 62, causing them to lift.

In one or more preferred embodiments, such as the one illustrated, the barrier members 62 are rotatably mounted around the same rotation axis I, which is substantially horizontal and oriented transversally to the feed direction K. The barrier members 62 are arranged side-by-side along the rotation axis I and are rotatable about the same axis independently of each other.

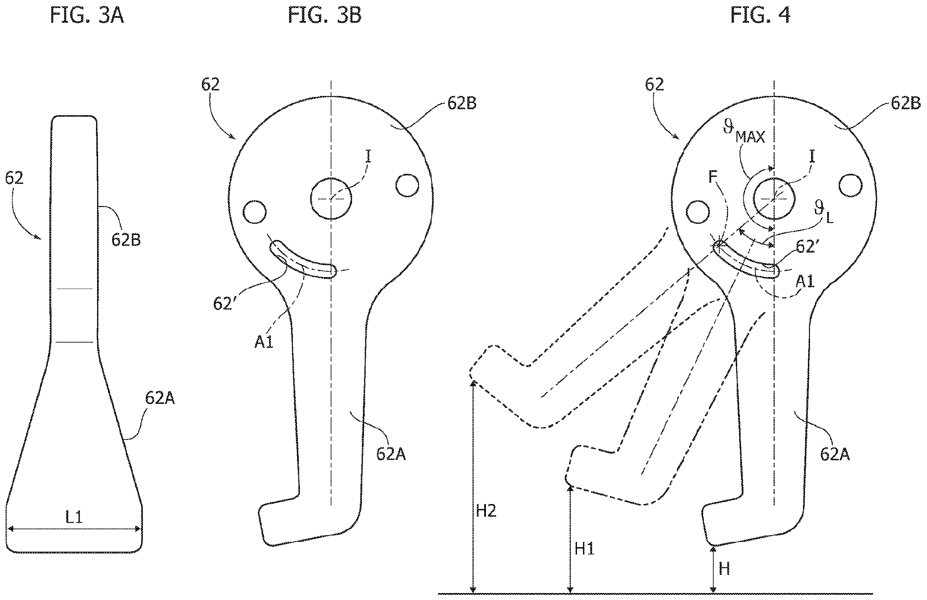

In one or more preferred embodiments, such as the one illustrated, the barrier members 62 have respective enlarged distal portions 62A, which are preferably of equal width (L1, see Figures 3A ) and are arranged immediately adjacent to each other. Preferably, the sum of the widths of the distal portions 62A of the barrier members 62 is substantially equal to the width L of the passage 42.

The width L1 of the distal portion 62A of the single barrier member 62 may be selected according to the type of application for which the inlet station 10 is intended, so that the barrier member 62 intercepts a single product among those which, on the conveyor 20, are found along the same direction transverse to the feed direction K.

In one or more preferred embodiments, such as the one illustrated, the control device 60 comprises an optical unit 64 for detecting the positions of the barrier members 62, in particular their angular positions around the rotation axis I.

In one or more preferred embodiments, such as the one illustrated, the optical unit 64 comprises an emitter module 64A, preferably a laser, of a beam of electromagnetic waves and a receiver module 64B for receiving the beam of electromagnetic waves emitted by the emitter module. The two modules 64A, 64B are respectively positioned at the opposite ends of the series of barrier members 62. The beam of electromagnetic waves is transmitted along a direction F substantially parallel to the rotation axis I. The optical unit 64 may comprise a control module - not shown - connected to the two modules 64A, 64B. The optical unit 64 may also comprise a plurality of pairs of emitter module 64A and receiver module 64B distributed around the rotation axis I.

The optical unit 64 is arranged to generate a first signal following reception by the receiver module 64B of the beam of electromagnetic waves emitted by the emitter module 64A, and a second signal in the absence of reception of the beam of electromagnetic waves.

In one or more preferred embodiments, such as the one illustrated, the barrier members 62 comprise respective control portions 62B, which extend in a plane transverse to the rotation axis I and which are shaped so as to intercept or let pass the beam of electromagnetic waves emitted by the emitter module 64A and directed to the receiver module 64B, according to the position of the respective barrier member 62 around the rotation axis I. The barrier member 62 may be movable for a predefined control distance θ_{MAX}, corresponding to a maximum rotation around the axis I.

In one or more preferred embodiments, such as the one illustrated, the control device 60 further comprises a control unit 68 connected to the optical unit 64 and configured to generate an alarm signal and/or a stop signal for the operating machine, according to a signal coming from the optical unit.

In one or more preferred embodiments, the control unit 68 is configured to generate the alarm or stop signal when the optical unit 64 generates the aforesaid second signal, i.e. the beam of electromagnetic waves emitted by the emitter module 64A is intercepted by the control portion 62B of a barrier member 62, and the beam of electromagnetic waves is therefore not received by the receiver module 64B.

Alternatively, the control unit 68 may instead be configured to emit the alarm or stop signal when the optical unit 64 generates the aforesaid first signal or the beam of electromagnetic waves is received by the receiver module 64B.

The control portion 62B has a configuration which varies according to the needs of the specific applications or on the basis of the position or positions of the barrier member 62 for which the generation of the alarm or stop signal is requested.

In a preferred application of the inlet station described here, the control device 60 may be used to detect any attempt to access the inside of the operating machine, through the inlet 40, by an operator, during operation of the machine.

As seen above, during normal operation of the machine, the barrier members 62 are raised up to a height H1 as a result of the passage of the products or containers, of equal height, through the inlet 40.

According to this application, the control portion 62B is configured to define a threshold angular position θ_{L} of the barrier member 62, corresponding to a height H2 greater than the height H1, which, once exceeded, determines the emission of the alarm or stop signal by the control unit 68. The height H2 may, for example, represent a maximum height of the barrier member above which a condition of safety is not guaranteed for the operator who is in the vicinity of the inlet station 10.

To this end, in one or more preferred embodiments, such as the one illustrated (see Figures 3A and 3B), the control portion 62B extends around the rotation axis I and has a circular slit 62'. The slit 62' is intended to be crossed by the beam of electromagnetic waves emitted by the emitter module 64A, and develops around the rotation axis I for a section A1 of a predetermined length such that an inner point of the slit 62' remains aligned with the direction F of the beam of electromagnetic waves for a rotation of the barrier member 62 from its completely lowered position up to the aforesaid threshold angular position. It will be understood that the section A1 therefore subtends an angle at least equal to the threshold angular position θ_{L}.

Therefore, as long as the barrier member 62 does not exceed the threshold angular position θ_{L} or the height H2, the beam of electromagnetic waves emitted by the emitter module 64A passes through the slit 62' and is received by the receiver module 64B. Exceeding this threshold angular position, the barrier member 62 intercepts, through its control portion 62B, the beam of electromagnetic waves and the latter is not received by the receiver module 64B. In this second case the control unit 68 generates the alarm or stop signal.

The presence of several barrier members 62 side-by-side optimizes the inlet station as it makes the movement of the barrier members 62 themselves less avoidable, therefore, the possible access of an operator to moving parts of the operating machine.

In a different application, alternative to the previous one, the control portion 62B of the barrier member may, instead, be used to detect the presence of the product or container on the conveyor 20 or its possible overturning during advancement towards the inlet 40.

In this case, the control portion 62B is configured to define a threshold angular position corresponding to the height H1 indicated above, and to allow the passage of the beam of electromagnetic waves only for angular positions greater than or equal to the threshold angular position. The alarm or stop signal is emitted when the barrier member 62 is below the height H1. Obviously, the height H1 defines a height below which there is no passage of product or container through the inlet 40.

It should now be noted that the configuration of the inlet station 10 may differ from that described above and illustrated in the figures.

For example, barrier members 62 may be rotatably mounted about a vertical rather than a horizontal axis of rotation. Furthermore, the control device 60 may provide a single barrier member 62 or a limited number of barrier members spaced apart from each other. The barrier members 62 may then be movable according to a translational movement or in any case according to a composite movement distinct from a rotation around a single rotation axis.

In general, the inlet station 10 therefore comprises:
- a conveyor for advancing products or containers along a feed direction;
- an inlet intended to be traversed by the products or containers advancing on the conveyor along the feed direction; and
- a device for controlling the inlet comprising:
   - at least one barrier member which is movable as a result of the products or containers passing through the inlet;
   - at least one optical unit for detecting the position of the at least one barrier member;
   - a control unit connected to the optical unit and configured to generate an alarm signal and/or a stop signal for the operating machine, as a function of a signal coming from the optical unit.

Still in general, preferably the at least one barrier member is movable starting from a rest position and along a control tract comprising a first position, wherein the at least one barrier member is in contact with the products or containers passing through the inlet, and a second position beyond the first position along the control tract, wherein the at least one barrier member is not in contact with the products or containers, and wherein the control unit is configured to generate the alarm signal and/or the stop signal if the barrier member is in the second position.

In one embodiment, the control device comprises one or more barrier members mounted to rotate around a vertical or in any case non-horizontal axis, and is arranged to detect the side dimensions of the products or containers which, moved by the conveyor, traverse the inlet.

Of course, without prejudice to the principle of the invention, the details of construction and the embodiments may vary, even significantly, with respect to those illustrated here, purely by way of non-limiting example, without departing from the scope of the invention as defined by the attached claims.

## Claims

1. A product- or container-inlet station (10) for an operating machine, comprising:
- a conveyor (20) for advancing products or containers along a feed direction (K);
- an inlet (40) intended to be traversed by the products or containers advancing on the conveyor (20) along the feed direction (K);
- a device for controlling the inlet (40) comprising:
at least one barrier member (62) which is movable as a result of the products or containers passing through the inlet (40);
**characterized in** comprising, at least one optical unit (64) for detecting the position of the at least one barrier member (62);
- a control unit connected to the optical unit (64) and configured to generate an alarm signal and/or a stop signal for the operating machine, as a function of a signal coming from the optical unit (64).

2. A station according to claim 1, wherein the at least one barrier member (62) is movable starting from a rest position and along a control tract (θ_{MAX}) comprising a first position, in which the at least one barrier member (62) is in contact with the products or containers passing through the inlet (40), and a second position beyond the first position along the control tract, in which the at least one barrier member (62) is not in contact with the products or containers, and wherein the control unit (68) is configured to generate the alarm signal and/or the stop signal if the barrier member (62) is in the second position.

3. A station according to any one of the preceding claims, wherein the at least one barrier member (62) comprises a series of barrier members (62), which are movable independently of each other and are set side-by-side along a main axis (I) of the inlet which is transversal to the feed direction (K).

4. A station according to any one of the preceding claims, wherein the at least one barrier member (62) is rotatable about a rotation axis (I) which is transversal to the feed direction (K).

5. A station according to any one of the preceding claims, wherein the optical unit (64) comprises an emitter module (64A), preferably a laser, for emitting a beam of electromagnetic waves and a receiver module (64B) for receiving the beam of electromagnetic waves emitted by the emitter module (64A).

6. A station according to claims 4 and 5, wherein the at least one barrier member (62) comprises a control portion (62B) which extends in a plane transversal to the rotation axis (I) and is shaped so as to intercept or let through the beam of electromagnetic waves emitted by the emitter module (64A) and directed to the receiver module (64B), as a function of the position of the barrier member (62) about the rotation axis (I).

7. A station according to claim 6, wherein the control portion (62B) extends about the rotation axis (I) and has at least one circular slit (62'), which extends about the rotation axis (I) for a predefined tract (A1) and is intended to be traversed by the beam of electromagnetic waves emitted by the emitter module (64A) and directed to the receiver module (64B).

8. A station according to claims 6 or 7, wherein the control portion (62B) is configured to define at least one threshold angular position (θ_{L}), and wherein the control unit (68) is configured to emit an alarm signal or a stop signal when the barrier member (62) is in or before/past the threshold angular position.

9. A station according to any one of the preceding claims, wherein the at least one barrier member (62) is set at a vertical distance (H1) from the conveyor (20) and can be raised as a result of the products or containers passing through the inlet (20).

10. A station according to claim 9, wherein the at least one barrier member (62) is rotatable about a rotation axis (I), which is substantially horizontal and is oriented transversally to the feed direction (K).

11. A station according to claim 10, wherein the at least one barrier member (62) comprises a series of barrier members (62), which are rotatable about the rotation axis (I) independently of each other and are set side-by-side along the same axis.

12. A station according to claim 11, wherein the barrier members (62) have enlarged distal portions (62B), preferably of equal width, and each one immediately adjacent to the others.

13. A station according to claim 12, wherein the sum of the widths of the distal portions of the barrier members (62) is substantially equal to a width (L) of the inlet (40).

14. An operating machine for executing an operating process on products or containers, comprising a product-inlet station (10) according to any one of the preceding claims.

15. A method for controlling an inlet for products or containers in an operating machine by means of an inlet station according to any one of claims 1 to 14, comprising the steps of:
- advancing the products or containers along the feed direction (K);
- making the products or containers advancing on the conveyor along the feed direction (K) pass through the inlet (40);
wherein the products or containers hit the at least one barrier member (62) as a result of their passage through the inlet (40);
- by means of the optical unit (64) detecting the position of the at least one barrier member (62); and
- generating an alarm signal and/or a stop signal for the operating machine, as a function of a signal coming from the optical unit (64).

## Patentansprüche

1. Produkt- oder Behältereinlassstation (10) für eine Arbeitsmaschine, die Folgendes umfasst:
- einen Förderer (20) zum Vorschieben von Produkten oder Behältern entlang einer Zuführrichtung (K);
- einen Einlass (40), der dazu vorgesehen ist, von den auf dem Förderer (20) entlang der Zuführrichtung (K) vorgeschobenen Produkten oder Behältern durchlaufen zu werden;
- eine Vorrichtung zum Steuern des Einlasses (40), die Folgendes umfasst:
mindestens ein Barriereelement (62), das infolge des Hindurchgehens der Produkte oder Behälter durch den Einlass (40) beweglich ist;
**dadurch gekennzeichnet, dass** sie Folgendes umfasst:
mindestens eine optische Einheit (64) zum Detektieren der Position des mindestens einen Barriereelements (62);
- eine Steuereinheit, die mit der optischen Einheit (64) verbunden und dazu ausgelegt ist, in Abhängigkeit von einem von der optischen Einheit (64) kommenden Signal ein Alarmsignal und/oder ein Stoppsignal für die Arbeitsmaschine zu erzeugen.

2. Station nach Anspruch 1, wobei das mindestens eine Barriereelement (62) ausgehend von einer Ruheposition und entlang einer Steuerstrecke (θ_{MAX} ) beweglich ist, die eine erste Position, in der das mindestens eine Barriereelement (62) in Kontakt mit den durch den Einlass (40) hindurchgehenden Produkten oder Behältern ist, und eine zweite Position jenseits der ersten Position entlang der Steuerstrecke, in der das mindestens eine Barriereelement (62) nicht in Kontakt mit den Produkten oder Behältern ist, umfasst, und wobei die Steuereinheit (68) dazu ausgelegt ist, das Alarmsignal und/oder das Stoppsignal zu erzeugen, wenn sich das Barriereelement (62) in der zweiten Position befindet.

3. Station nach einem der vorhergehenden Ansprüche, wobei das mindestens eine Barriereelement (62) eine Reihe von Barriereelementen (62) umfasst, die unabhängig voneinander beweglich sind und entlang einer Hauptachse (I) des Einlasses, die quer zur Zuführrichtung (K) verläuft, nebeneinander angeordnet sind.

4. Station nach einem der vorhergehenden Ansprüche, wobei das mindestens eine Barriereelement (62) um eine Drehachse (I) drehbar ist, die quer zur Zuführrichtung (K) verläuft.

5. Station nach einem der vorhergehenden Ansprüche, wobei die optische Einheit (64) ein Emittermodul (64A), vorzugsweise einen Laser, zum Emittieren eines Strahls elektromagnetischer Wellen und ein Empfängermodul (64B) zum Empfangen des durch das Emittermodul (64A) emittierten Strahls elektromagnetischer Wellen umfasst.

6. Station nach den Ansprüchen 4 und 5, wobei das mindestens eine Barriereelement (62) einen Steuerabschnitt (62B) umfasst, der sich in einer Ebene quer zur Drehachse (I) erstreckt und so geformt ist, dass er den durch das Emittermodul (64A) emittierten und auf das Empfängermodul (64B) gerichteten Strahl elektromagnetischer Wellen in Abhängigkeit von der Position des Barriereelements (62) um die Drehachse (I) abfängt oder durchlässt.

7. Station nach Anspruch 6, wobei sich der Steuerabschnitt (62B) um die Drehachse (I) erstreckt und mindestens einen kreisförmigen Schlitz (62') aufweist, der sich für eine vordefinierte Strecke (A1) um die Drehachse (I) erstreckt und dazu vorgesehen ist, von dem durch das Emittermodul (64A) emittierten und auf das Empfängermodul (64B) gerichteten Strahl elektromagnetischer Wellen durchlaufen zu werden.

8. Station nach Anspruch 6 oder 7, wobei der Steuerabschnitt (62B) dazu ausgelegt ist, mindestens eine Schwellenwinkelposition (θ_{L}) zu definieren, und wobei die Steuereinheit (68) dazu ausgelegt ist, ein Alarmsignal oder ein Stoppsignal zu emittieren, wenn sich das Barriereelement (62) in oder vor/hinter der Schwellenwinkelposition befindet.

9. Station nach einem der vorhergehenden Ansprüche, wobei das mindestens eine Barriereelement (62) in einem vertikalen Abstand (H1) von dem Förderer (20) angeordnet ist und infolge der durch den Einlass (20) hindurchgehenden Produkte oder Behälter angehoben werden kann.

10. Station nach Anspruch 9, wobei das mindestens eine Barriereelement (62) um eine Drehachse (I) drehbar ist, die im Wesentlichen horizontal ist und quer zur Zuführrichtung (K) ausgerichtet ist.

11. Station nach Anspruch 10, wobei das mindestens eine Barriereelement (62) eine Reihe von Barriereelementen (62) umfasst, die unabhängig voneinander um die Drehachse (I) drehbar sind und entlang derselben Achse nebeneinander angeordnet sind.

12. Station nach Anspruch 11, wobei die Barriereelemente (62) vergrößerte distale Abschnitte (62B), vorzugsweise von gleicher Breite, aufweisen und jedes unmittelbar an die anderen angrenzt.

13. Station nach Anspruch 12, wobei die Summe der Breiten der distalen Abschnitte der Barriereelemente (62) im Wesentlichen gleich einer Breite (L) des Einlasses (40) ist.

14. Arbeitsmaschine zum Ausführen eines Arbeitsprozesses an Produkten oder Behältern, umfassend eine Produkteinlassstation (10) nach einem der vorhergehenden Ansprüche.

15. Verfahren zum Steuern eines Einlasses für Produkte oder Behälter in einer Arbeitsmaschine mittels einer Einlassstation nach einem der Ansprüche 1 bis 14, umfassend die folgenden Schritte:
- Vorschieben der Produkte oder Behälter entlang der Zuführrichtung (K);
- Bewirken eines Hindurchgehens der auf dem Förderer entlang der Zuführrichtung (K) vorgeschobenen Produkte oder Behälter durch den Einlass (40);
wobei die Produkte oder Behälter infolge ihres Hindurchgehens durch den Einlass (40) auf das mindestens eine Barriereelement (62) treffen;
- mittels der optischen Einheit (64), Detektieren der Position des mindestens einen Barriereelements (62); und
- Erzeugen eines Alarmsignals und/oder eines Stoppsignals für die Arbeitsmaschine in Abhängigkeit von einem von der optischen Einheit (64) kommenden Signal.

## Revendications

1. Poste d'entrée de produit ou de récipient (10) pour une machine d'exploitation, comprenant :
- un convoyeur (20) pour faire avancer des produits ou des récipients le long d'une direction d'alimentation (K) ;
- une entrée (40) destinée à être traversée par les produits ou les récipients avançant sur le convoyeur (20) le long de la direction d'alimentation (K) ;
- un dispositif pour commander l'entrée (40) comprenant :
au moins un élément de barrière (62) qui est mobile sous l'effet du passage de produits ou de récipients à travers l'entrée (40) ;
**caractérisé en ce qu'**il comprend,
au moins une unité optique (64) pour détecter la position de l'au moins un élément de barrière (62) ;
- une unité de commande connectée à l'unité optique (64) et configurée pour générer un signal d'alarme et/ou un signal d'arrêt pour la machine d'exploitation, en fonction d'un signal provenant de l'unité optique (64).

2. Poste selon la revendication 1, dans lequel l'au moins un élément de barrière (62) est mobile à partir d'une position de repos et le long d'une trajectoire de commande (θmax) comprenant une première position, dans laquelle l'au moins un élément de barrière (62) est en contact avec les produits ou récipients traversant l'entrée (40), et une deuxième position au-delà de la première position le long de la trajectoire de commande, dans laquelle l'au moins un élément de barrière (62) n'est pas en contact avec les produits ou les récipients, et dans lequel l'unité de commande (68) est configurée pour générer le signal d'alarme et/ou le signal d'arrêt si l'élément de barrière (62) se trouve dans la deuxième position.

3. Poste selon l'une quelconque des revendications précédentes, dans lequel l'au moins un élément de barrière (62) comprend une série d'éléments de barrière (62), qui sont mobiles indépendamment les uns des autres et disposés côte-à-côte le long d'un axe principal (I) de l'entrée, qui est transversal à la direction d'alimentation (K).

4. Poste selon l'une quelconque des revendications précédentes, dans lequel l'au moins un élément de barrière (62) est rotatif autour d'un axe de rotation (I) qui est transversal à la direction d'alimentation (K).

5. Poste selon l'une quelconque des revendications précédentes, dans lequel l'unité optique (64) comprend un module émetteur (64A), de préférence un laser, pour émettre un faisceau d'ondes électromagnétiques et un module récepteur (64B) pour recevoir le faisceau d'ondes électromagnétiques émis par le module émetteur (64A).

6. Poste selon les revendications 4 et 5, dans lequel l'au moins un élément barrière (62) comprend une partie de commande (62B) qui s'étend dans un plan transversal à l'axe de rotation (I) et est formé de façon à intercepter ou laisser passer le faisceau d'ondes électromagnétiques émis par le module émetteur (64A) et dirigé vers le module récepteur (64B), en fonction de la position de l'élément de barrière (62) autour de l'axe de rotation (I).

7. Poste selon la revendication 6, dans lequel la partie de commande (62B) s'étend autour de l'axe de rotation (I) et a au moins une fente circulaire (62'), qui s'étend autour de l'axe de rotation (I) pour une trajectoire prédéfinie (A1) et est destinée à être traversée par le faisceau d'ondes électromagnétiques émis par le module émetteur (64A) et dirigé vers le module récepteur (64B).

8. Poste selon les revendications 6 ou 7, dans lequel la partie de commande (62B) est configurée pour définir au moins une position angulaire seuil (θ_{L}), et dans lequel l'unité de commande (68) est configurée pour émettre un signal d'alarme ou un signal d'arrêt lorsque l'élément de barrière (62) se trouve à la position angulaire seuil ou bien avant/après celle-ci.

9. Poste selon l'une quelconque des revendications précédentes, dans lequel l'au moins un élément de barrière (62) est réglé à une distance verticale (H1) par rapport au convoyeur (20) et peut être soulevé sous l'effet du passage des produits ou récipients travers l'entrée (20).

10. Poste selon la revendication 9, dans lequel l'au moins un élément de barrière (62) est rotatif autour d'un axe de rotation (I), qui est essentiellement horizontal et qui est orienté transversalement à la direction d'alimentation (K).

11. Poste selon la revendication 10, dans lequel l'au moins un élément de barrière (62) comprend une série d'éléments de barrière (62), qui sont rotatifs autour de l'axe de rotation (I) indépendamment les uns des autres et qui sont disposés côte-à-côte le long du même axe.

12. Poste selon la revendication 11, dans lequel les éléments de barrière (62) ont des parties distales agrandies (62B), de préférence de largeur égale, chacune immédiatement adjacente aux autres.

13. Poste selon la revendication 12, dans lequel la somme des largeurs des parties distales des éléments de barrière (62) est essentiellement égale à une largeur (L) de l'entrée (40).

14. Machine d'exploitation pour l'exécution d'un processus d'exploitation sur des produits ou des récipients, comprenant un poste d'entrée de produit (10) selon l'une quelconque des revendications précédentes.

15. Procédé de commande d'une entrée pour des produits ou récipients dans une machine d'exploitation au moyen d'un poste d'entrée selon l'une quelconque des revendications 1 à 14, comprenant les étapes suivantes :
- faire avancer les produits ou récipients le long de la direction d'alimentation (K) ;
- faire passer les produits ou récipients avançant sur le convoyeur le long de la direction d'alimentation (K) à travers l'entrée (40) ;
les produits ou récipients heurtant l'au moins un élément de barrière (62) sous l'effet de leur passage à travers l'entrée (40) ;
- au moyen de l'unité optique (64) détectant la position de l'au moins un élément de barrière (62) ; et
- générer un signal d'alarme et/ou un signal d'arrêt pour la machine d'exploitation, en fonction d'un signal provenant de l'unité optique (64).
